# DEMANDE DE BREVET EUROPEEN

(11) **EP 0 706 871 A1**
(43) Date de publication de la demande: **17.04.1996**
(21) Numéro de dépôt: 95402258.8
(22) Date de dépôt: 09.10.1995
(51) Int. Cl.: B29C 35/10, G02B 6/44

(54) **Procédé de revêtement d'un ruban de fibres optiques au moyen d'une résine, et dispositif pour la mise en oeuvre d'un tel procédé**

(30) Priorité: 13.10.1994 FR 9412224
(71) Demandeur: ALCATEL CABLE, F-92100 Clichy (FR)
(72) Inventeur: Bonicel, Jean-Pierre, F-92500 Rueil (FR); Keller, David, F-95400 Vaureal Cergy (FR); Mc Nutt, Christopher, F-78100 St. Germain en Laye (FR)
(74) Mandataire: Pothet, Jean Rémy Emile Ludovic

(57) **Abrégé**

La présente invention concerne un procédé de revêtement, au moyen d'une résine, d'un ruban de fibres optiques comprenant une pluralité de fibres optiques (101) disposées parallèlement les unes aux autres sensiblement dans un même plan, la résine étant polymérisable sous l'effet d'un rayonnement ultraviolet et étant destinée à former un revêtement protecteur entourant et maintenant les fibres (101), ce procédé comprenant les opérations suivantes :
- enduction des fibres (101) disposées parallèlement les unes aux autres et dans leur plan au moyen de la résine non polymérisée,
- polymérisation de la résine par exposition des fibres ainsi enduites à un rayonnement ultraviolet,

ce procédé étant caractérisé en ce que la polymérisation est effectuée en au moins deux étapes:
- une pré-polymérisation au cours de laquelle les fibres enduites défilent dans une ampoule (23) de symétrie de révolution autour d'un axe (X), à travers un passage adapté de cette ampoule, cette ampoule générant un rayonnement ultraviolet uniforme dans le passage, la puissance du rayonnement ultraviolet de pré-polymérisation étant inférieure au quart de la puissance totale nécessaire pour polymériser la résine, de manière à être juste suffisante pour initier la polymérisation de la résine afin d'obtenir un ruban pré-polymérisé (103), sans que le rayonnement infrarouge émis conjointement au rayonnement ultraviolet échauffe de manière excessive la résine,
- au moins une étape de fini de la polymérisation au cours de laquelle le ruban pré-polymérisé (103) est soumis à un rayonnement ultraviolet de puissance supérieure à celle du rayonnement produit par l'ampoule (23) de pré-polymérisation, de manière à terminer la polymérisation de la résine (104).

## Description

La présente invention concerne un procédé de revêtement d'un ruban de fibres optiques au moyen d'une résine, ainsi qu'un dispositif pour la mise en oeuvre d'un tel procédé.

De manière bien connue, les rubans de fibres optiques, utilisés de plus en plus dans les câbles de télécommunications à haut débit, comprennent une pluralité de fibres optiques (elles-mêmes formées d'un coeur optique à base de silice entouré d'une gaine optique également à base de silice d'indice inférieur à celui du coeur, et éventuellement revêtues d'une couche protectrice le plus souvent colorée, servant à les distinguer les unes des autres à l'intérieur du ruban), en général 2 à 24, disposées parallèlement les unes aux autres et sensiblement dans un même plan. L'ensemble de ces fibres est noyé dans une résine de maintien et de protection ; dans le cadre de la présente invention, cette résine est une résine polymérisable sous l'effet d'un rayonnement ultraviolet, c'est-à-dire qu'elle contient un photo-initiateur réagissant sous l'effet du rayonnement ultraviolet en entraînant un durcissement de la résine dans laquelle sont ainsi formées des chaînes de polymères.

Au-dessus du revêtement de résine, on peut encore éventuellement trouver d'autres revêtements de protection de résine.

Un procédé classique de revêtement de l'ensemble de fibres par la résine de protection consiste à faire défiler les fibres maintenues parallèles les unes aux autres et dans leur plan à travers une filière d'enduction contenant la résine non polymérisée, puis à faire ensuite défiler l'ensemble ainsi revêtu dans un dispositif de polymérisation, appelé plus communément four ultraviolet.

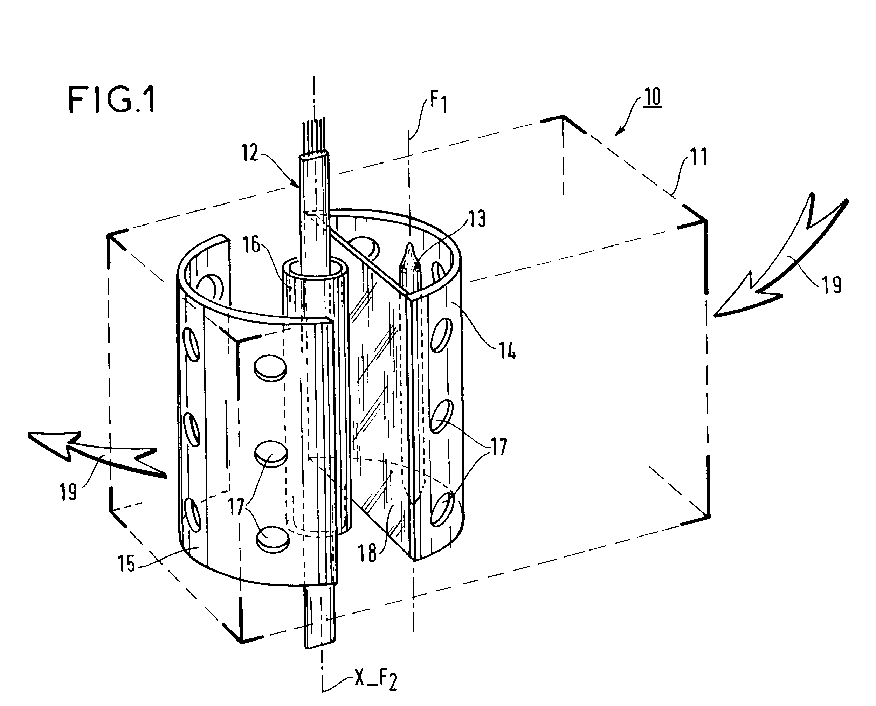

Un premier type de dispositifs de polymérisation, représenté de manière schématique en figure 1 où il est référencé 10, commercialisé par exemple par la Société FUSION SYSTEMS, fonctionne selon le principe suivant. Dans une enceinte 11 en général fermée et imperméable au rayonnement ultraviolet (afin de protéger le milieu extérieur contre le rayonnement ultraviolet) et qui comprend un orifice d'entrée et un orifice de sortie (non référencés) pour le passage du corps à traiter (ici un ruban enduit 12), sont installés :
- une ampoule creuse scellée 13 contenant en général des vapeurs de mercure, reliée à une source, électrique (des électrodes par exemple) ou de micro-ondes (un magnétron par exemple), non représentée, destinée à exciter le mercure contenu dans l'ampoule 13 afin de générer un rayonnement ultraviolet,
- un réflecteur 14 cylindro-elliptique, sur l'axe focal F₁ duquel est disposée l'ampoule 13, et servant à concentrer le rayonnement ultraviolet sensiblement sur un axe X le long duquel le ruban enduit 12 doit défiler,
- un contre-réflecteur elliptique 15 dont l'axe focal F₂ est confondu avec l'axe X précédent, assure la focalisation de l'ensemble du rayonnement émis sur l'axe X et donc sur le ruban enduit 12.

Un tel dispositif peut comprendre en outre, de manière facultative, un tube de quartz 16 dont l'axe est confondu avec l'axe de défilement X du corps à traiter, un système de refroidissement de la zone de traitement par circulation d'air (représentée par les flèches 19), par exemple à travers des orifices 17 prévus à cet effet dans les réflecteurs 14 et 15, ainsi qu'un écran 18 interposé entre l'ampoule 13 et l'axe X, transparent au rayonnement ultraviolet et absorbant les micro-ondes dans les cas où l'ampoule 13 est excitée au moyen de micro-ondes.

Ainsi, lorsque le ruban enduit 12 défile dans un tel four, il est soumis à un rayonnement ultraviolet qui a pour effet de polymériser la résine dont il est enduit.

Toutefois, un problème posé par ce premier type de dispositifs réside dans le fait que la puissance du rayonnement ré-émis par le contre-réflecteur 15 est inférieure à celle du rayonnement direct. Ainsi, le ruban n'est pas soumis à une puissance de rayonnement uniforme en tous points, de sorte que le niveau de polymérisation de la résine varie au sein du revêtement. Les parties du revêtement au niveau desquelles la résine est pratiquement entièrement polymérisée ont tendance à exercer des sollicitations en traction sur celles au niveau desquelles la résine n'est que partiellement polymérisée, de sorte que les rubans obtenus ne sont pas plans, mais incurvés. Or ceci est préjudiciable lors de l'utilisation des rubans, pour au moins trois raisons majeures :
- les sollicitations ne sont pas uniformément réparties au sein du revêtement de résine, de sorte que des contraintes sont appliquées aux fibres contenues dans le ruban ; ces contraintes conduisent à une augmentation de l'atténuation des fibres, préjudiciable aux performances de transmission de ces dernières,
- le ruban est beaucoup plus encombrant que lorsqu'il est sensiblement plan,
- les raccordements du ruban sont plus délicats à effectuer.

En outre, lorsque les fibres contenues dans le ruban sont munies d'un revêtement coloré, ce revêtement absorbe une partie du rayonnement ultraviolet, l'empêchant de parvenir de l'autre côté du ruban. Etant donné que la puissance du rayonnement ré-émis par le contre-réflecteur 15 est inférieure à celle du rayonnement direct, et que toute la puissance ne peut traverser le ruban, la puissance reçue sur un côté est supérieure à celle reçue sur l'autre ; ainsi, la polymérisation n'est pas identique de chaque côté, ce qui constitue une cause supplémentaire de la forme incurvée du ruban obtenu.

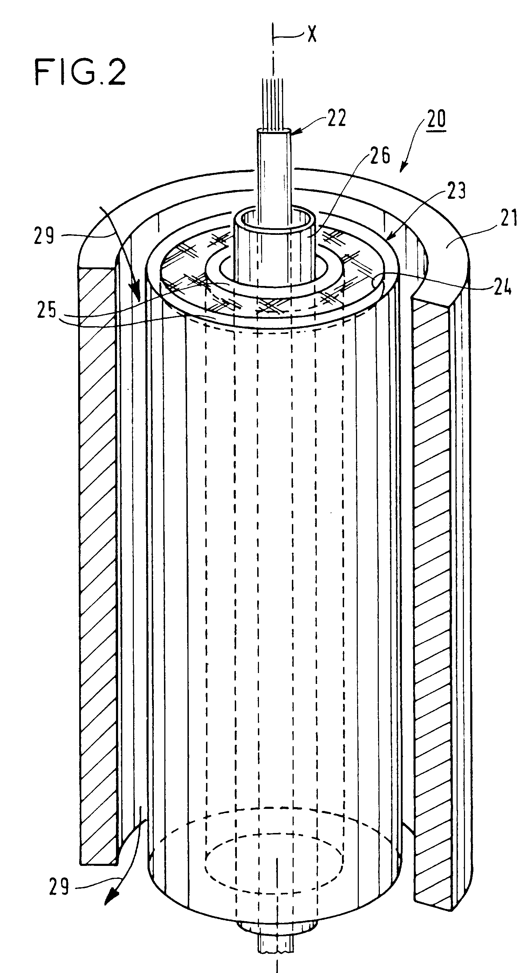

Pour résoudre ces problèmes, on a pensé à utiliser un deuxième type de dispositifs de polymérisation, représenté schématiquement en figure 2 et portant la référence 20, commercialisé par exemple par la Société DEFITECH. Ces dispositifs fonctionnent selon le principe suivant. Dans une enceinte 21 (représentée partiellement coupée), par exemple tubulaire, en général imperméable au rayonnement ultraviolet, et qui comprend un orifice d'entrée et un orifice de sortie (non référencés) pour le passage d'un ruban enduit 22, est disposée une ampoule tubulaire 23, comportant un passage axial 24, et à double paroi 25 ; l'espace entre ces deux parois 25 est rempli d'un matériau dont l'excitation au moyen de micro-ondes génère un rayonnement ultraviolet.

Le produit à polymériser défile dans cette ampoule 23 par le passage 24 de cette dernière prévu à cet effet. Puisque l'ampoule 23 est tubulaire, et que la source du rayonnement ultraviolet occupe tout l'espace entre ses parois 25, entourant ainsi tout le passage axial 24, le rayonnement est uniforme dans ce demier ; quel que soit l'endroit précis où défile le ruban 22 dans l'ampoule 23, la polymérisation est uniforme. En outre, ce type de dispositifs permet d'éviter l'utilisation de réflecteurs, qui absorbent une grande partie de la puissance du rayonnement émis par l'ampoule.

Ce dispositif peut en outre comprendre, de manière facultative, un tube en quartz 26 (ou en tout autre matériau transparent au rayonnement ultraviolet) dont l'axe est confondu avec l'axe de défilement X du ruban 22, ainsi qu'une chemise extérieure de refroidissement (non représentée) au moyen d'une huile silicone (dont la circulation est représentée par les flèches 29).

Toutefois, un tel dispositif pose encore certains problèmes.

Etant donné que le ruban à polymériser défile directement en regard de la source de rayonnement ultraviolet, le rayonnement infrarouge, inévitable, émis conjointement au rayonnement ultraviolet et qui atteint le ruban a une puissance très élevée.

Or le rayonnement infrarouge est préjudiciable car il conduit à un échauffement excessif du revêtement à polymériser, ce qui provoque la courbure du ruban et induit donc des microcontraintes sur les fibres individuelles une fois le ruban polymérisé. Ces microcontraintes ont pour effet d'augmenter l'atténuation des fibres. Les problèmes posés sont donc identiques à ceux posés par les dispositifs du premier type.

Un but de la présente invention est donc de mettre au point un procédé de revêtement d'un ruban de fibres optiques au moyen d'une résine permettant d'obtenir des rubans sensiblement plans.

Un autre but de la présente invention est de mettre au point un tel procédé qui ne conduit pas à un échauffement excessif du revêtement.

La présente invention propose à cet effet un procédé de revêtement, au moyen d'une résine, d'un ruban de fibres optiques comprenant une pluralité de fibres optiques disposées parallèlement les unes aux autres sensiblement dans un même plan, ladite résine étant polymérisable sous l'effet d'un rayonnement ultraviolet et étant destinée à former un revêtement protecteur entourant et maintenant lesdites fibres, ledit procédé comprenant les opérations suivantes :
- enduction desdites fibres disposées parallèlement les unes aux autres et dans leur plan au moyen de ladite résine non polymérisée,
- polymérisation de ladite résine par exposition des fibres ainsi enduites à un rayonnement ultraviolet,
   ledit procédé étant caractérisé en ce que ladite polymérisation est effectuée en au moins deux étapes :
- une pré-polymérisation au cours de laquelle lesdites fibres enduites défilent dans une ampoule de symétrie de révolution autour d'un axe, à travers un passage adapté de ladite ampoule, ladite ampoule générant un rayonnement ultraviolet uniforme dans ledit passage, la puissance dudit rayonnement ultraviolet de pré-polymérisation étant inférieure au quart de la puissance totale nécessaire pour polymériser entièrement ladite résine, de manière à être juste suffisante pour initier la polymérisation de ladite résine afin d'obtenir un ruban pré-polymérisé, sans que le rayonnement infrarouge émis conjointement audit rayonnement ultraviolet échauffe de manière excessive ladite résine,
- au moins une étape de fini de la polymérisation au cours de laquelle ledit ruban pré-polymérisé est soumis à un rayonnement ultraviolet de puissance supérieure à celle du rayonnement produit par ladite ampoule de pré-polymérisation, de manière à terminer la polymérisation de ladite résine.

Grâce au procédé selon l'invention, un dispositif du deuxième type indiqué plus haut est utilisé uniquement pour effectuer une pré-polymérisation, c'est-à-dire qu'il peut être utilisé à une puissance bien plus faible que celle nécessaire pour effectuer la polymérisation complète, cette puissance étant suffisante pour polymériser la résine au point que cette dernière prend une forme sensiblement plane qu'elle conserve ensuite lors de l'opération de fini de polymérisation.

En outre, comme la puissance lors de la pré-polymérisation est relativement faible, celle du rayonnement infrarouge parasite l'est également, de sorte qu'il ne se produit pas d'échauffement excessif.

De manière avantageuse avec le procédé selon l'invention, le temps de traitement n'est pas augmenté du fait de l'étape de pré-polymérisation, puisque les dispositifs de pré-polymérisation et de polymérisation peuvent être disposés en ligne et que le temps de passage dans le dispositif de pré-polymérisation n'est pas supérieur à celui nécessaire à la polymérisation.

La présente invention concerne également un dispositif pour la mise en oeuvre du procédé précédent.

D'autres caractéristiques et avantages de la présente invention apparaîtront dans la description qui va suivre du procédé selon l'invention et d'un mode de mise en oeuvre de ce dernier, donnée à titre illustratif et nullement limitatif.

Dans les figures suivantes :
- la figure 1 est une vue schématique en perspective d'un dispositif du premier type connu (à réflecteurs),
- la figure 2 est une vue schématique en perspective d'un dispositif du deuxième type connu (à ampoule tubulaire),
- la figure 3 représente de manière schématique un dispositif pour la mise en oeuvre du procédé selon l'invention,
- la figure 4 est une coupe transversale d'un ruban incurvé.

Les figures 1 et 2 ont été décrites lors de la présentation de l'état de la technique.

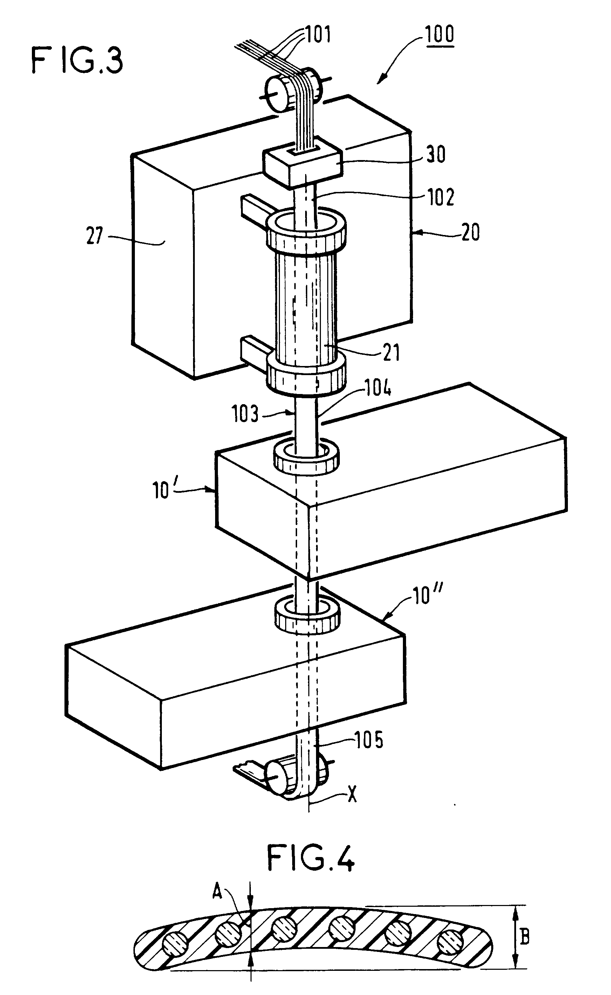

Le dispositif 100 représenté sur la figure 3 comporte, disposés les uns à la suite des autres, une filière d'enduction 30, un four de pré-polymérisation identique au four 20 de la figure 2 et deux fours de fini de polymérisation identiques au four 10 de la figure 1, référencés 10' et 10".

Il est bien évident que plus ou moins de deux fours de fini de polymérisation peuvent être employés selon le type de ruban à traiter et l'épaisseur du revêtement protecteur de résine. Pour des raisons de clarté, seuls deux de ces dispositifs ont été représentés, et l'on supposera dans la suite de la description que la polymérisation nécessite que deux fours de fini de polymérisation.

On va maintenant décrire plus en détail le dispositif 100.

La filière d'enduction 30 est une filière classique : les six fibres optiques 101 du ruban à obtenir, maintenues parallèles les unes aux autres et sensiblement dans un même plan vertical, traversent la filière 30 contenant la résine liquide, non polymérisée, de sorte qu'elles sont enduites de cette résine en sortie de la filière 30. On appellera le produit en sortie de la filière 30 "ruban enduit", référencé 102.

Le ruban enduit 102 est ensuite dirigé vers le four de pré-polymérisation 20.

L'enceinte 21 a un diamètre extérieur d'environ 50 mm, et l'ampoule 23 a un diamètre extérieur de 30 mm et une longueur de 300 mm. Le passage axial 24 de l'ampoule 23 a un diamètre égal à 20 mm.

L'espace entre les deux parois 25 est rempli par exemple de vapeurs métalliques de mercure et de fer dans un gaz porteur comme l'argon, dont l'excitation au moyen de micro-ondes, par l'intermédiaire d'un magnétron 27 (voir figure 3) relié aux deux extrémités de l'ampoule 23 le long de l'axe X, génère un rayonnement ultraviolet réparti uniformément dans le passage 24.

Le ruban enduit 102 défile sensiblement le long de l'axe X, et subit à l'intérieur de l'ampoule 23, dans le passage 24, une pré-polymérisation, de sorte que la polymérisation de la résine dont il est enduit en sortie de la filière 30 commence dans le four 20. Cette pré-polymérisation étant uniforme du fait des propriétés du four 20, le ruban obtenu en sortie du four 20, appelé ruban pré-polymérisé 103, recouvert d'un revêtement de résine pré-polymérisée 104, n'est pas incurvé.

La pré-polymérisation est juste suffisante pour que le revêtement 104 prenne une forme sensiblement plane, mais insuffisante pour que la polymérisation soit totale en sortie du four 20, c'est-à-dire que la puissance du rayonnement ultraviolet dans le four 20 est peu élevée. Ceci permet d'éviter que le rayonnement infrarouge coexistant avec le rayonnement ultraviolet ait une puissance trop forte et préjudiciable à la qualité du ruban : même si le rayonnement infrarouge existe toujours dans le dispositif 20, lorsque la puissance est faible, son effet est négligeable.

Le ruban pré-polymérisé 103 pénètre ensuite successivement dans les deux fours de fini de polymérisation 10' et 10".

Le ruban pré-polymérisé 103 défile sensiblement le long de l'axe X. Dans les fours 10 et 10", il est soumis à un rayonnement ultraviolet de forte puissance (supérieure à la puissance du rayonnement ultraviolet dans le four 20 de pré-polymérisation) pour assurer la polymérisation complète du revêtement 104. Le ruban final obtenu en sortie du four 10" est référencé 105.

Grâce à la pré-polymérisation préalable dans le four 20, le ruban est suffisamment rigidifié pour conserver sa forme plane lors de la polymérisation dans les fours 10' et 10", de sorte que les inconvénients des fours 10 et 20 lorsqu'ils sont utilisés pour effectuer la polymérisation complète sont évités lorsque l'on effectue une pré-polymérisation avec le four 20 et un fini de polymérisation avec les fours 10' et 10".

On obtient ainsi un ruban dont la planéité est bien meilleure que celle des rubans obtenus par polymérisation complète dans le four 10 ou le four 20.

Les mesures effectuées sur les rubans obtenus au moyen du procédé selon l'invention montrent, en se référant à la figure 4 où l'on voit en coupe un ruban incurvé, la grandeur A représentant l'épaisseur transversale du ruban incurvé, et la grandeur B représentant la distance entre deux plans délimitant le ruban incurvé, que le rapport A/B est supérieur à 97% pour le ruban obtenu avec le procédé selon l'invention, alors que ce rapport est voisin de 80% pour les rubans obtenus avec les procédés connus.

Le procédé selon l'invention permet donc une amélioration non négligeable des qualités des rubans obtenus.

Par ailleurs, les opérations de pré-polymérisation et de fini de polymérisation pouvant être effectuées en ligne, et l'étape de pré-polymérisation demandant un temps de présence du ruban dans le four 20 sensiblement identique à celui nécessaire pour le fini de la polymérisation, le procédé selon l'invention n'est pas pénalisant quant au rendement de l'opération de revêtement.

On donne ci-après un exemple de mise en oeuvre précis du procédé selon l'invention avec le dispositif qui vient d'être décrit. Bien évidemment, cet exemple n'est donné qu'à titre illustratif.

Le matériau à polymériser et constituant le revêtement d'un ruban de fibres optiques de six fibres est une résine dite à polymérisation rapide. La polymérisation d'une telle résine requiert une puissance totale de rayonnement ultraviolet de 8000 W environ, avec une vitesse de défilement dans le dispositif de polymérisation de 220 m/min environ.

Compte tenu de ces données, avec un dispositif mettant en oeuvre le procédé selon la présente invention, on applique, dans le four 20, une puissance d'environ 1000 à 2000 W, correspondant à la moitié de la puissance maximale que l'on peut obtenir avec un tel four, et au maximum au quart de la puissance totale nécessaire pour polymériser la résine.

Puis, dans le four 10', on applique une puissance d'environ 2000 W, correspondant également à la moitié de la puissance maximale de ce four, et enfin, dans le four 10", on applique une puissance de 4000 W.

En pratique, plus la résine est polymérisée, plus elle résiste aux déformations susceptibles de se produire du fait de l'utilisation des dispositifs du premier type, c'est pourquoi l'on peut graduellement accroître la puissance dans ces derniers.

Bien entendu, la présente invention n'est pas limitée au mode de réalisation qui vient d'être décrit.

En particulier, pour le dispositif de pré-polymérisation, l'on pourra choisir tout dispositif permettant d'obtenir un rayonnement uniforme autour de l'axe de défilement, et notamment toute ampoule ayant une symétrie de révolution autour de cet axe, et munie d'un passage adapté.

D'autre part, le ou les dispositifs de fini de polymérisation peuvent être de tout type connu, et pas nécessairement excités au moyen d'un magnétron ; ils peuvent par exemple être excités au moyen d'électrodes.

En outre, pour effectuer le fini de polymérisation, il est possible d'utiliser un ou plusieurs dispositifs du même type que celui utilisé pour la pré-polymérisation. Dans ce cas, il faudra prendre garde à régler la puissance de manière à éviter l'effet préjudiciable du rayonnement infrarouge ; cela n'est pas pénalisant car la polymérisation a déjà commencé lors de la pré-polymérisation, de sorte qu'une puissance moins importante est nécessaire pour le fini de polymérisation.

Pour effectuer le fini de polymérisation, on pourra utiliser plusieurs dispositifs du premier ou du deuxième type, ou une combinaison de ces derniers.

Bien évidemment, le ruban pourra comporter plus ou moins de six fibres optiques, en général de 2 à 24.

Enfin, on pourra remplacer tout moyen par un moyen équivalent sans sortir du cadre de l'invention.

## Revendications

1. Procédé de revêtement, au moyen d'une résine, d'un ruban de fibres optiques comprenant une pluralité de fibres optiques (101) disposées parallèlement les unes aux autres sensiblement dans un même plan, ladite résine étant polymérisable sous l'effet d'un rayonnement ultraviolet et étant destinée à former un revêtement protecteur entourant et maintenant lesdites fibres (101), ledit procédé comprenant les opérations suivantes :
- enduction desdites fibres (101) disposées parallèlement les unes aux autres et dans leur plan au moyen de ladite résine non polymérisée,
- polymérisation de ladite résine par exposition des fibres ainsi enduites à un rayonnement ultraviolet,
ledit procédé étant caractérisé en ce que ladite polymérisation est effectuée en au moins deux étapes :
- une pré-polymérisation au cours de laquelle lesdites fibres enduites défilent dans une ampoule (23) de symétrie de révolution autour d'un axe (X), à travers un passage adapté de ladite ampoule, ladite ampoule générant un rayonnement ultraviolet uniforme dans ledit passage, la puissance dudit rayonnement ultraviolet de pré-polymérisation étant inférieure au quart de la puissance totale nécessaire pour polymériser ladite résine, de manière à être juste suffisante pour initier la polymérisation de ladite résine afin d'obtenir un ruban pré-polymérisé (103), sans que le rayonnement infrarouge émis conjointement audit rayonnement ultraviolet échauffe de manière excessive ladite résine,
- au moins une étape de fini de la polymérisation au cours de laquelle ledit ruban pré-polymérisé (103) est soumis à un rayonnement ultraviolet de puissance supérieure à celle du rayonnement produit par ladite ampoule (23) de pré-polymérisation, de manière à terminer la polymérisation de ladite résine (104).

2. Procédé selon la revendication 1 caractérisé en ce que ladite ampoule (23) est tubulaire et en ce que lesdites fibres enduites défilent sensiblement le long de l'axe (X) du tube formant ladite ampoule.

3. Dispositif pour la mise en oeuvre d'un procédé selon l'une des revendications 1 ou 2 comprenant une filière (30) d'enduction de résine et des moyens de polymérisation par rayonnement ultraviolet disposés en sortie de ladite filière, caractérisé en ce que lesdits moyens de polymérisation comprennent :
- des moyens de pré-polymérisation (20) comprenant une ampoule (23) de symétrie de révolution autour d'un axe (X), générant un rayonnement ultraviolet uniforme autour dudit axe, la puissance dudit rayonnement de pré-polymérisation étant inférieure au quart de la puissance totale nécessaire pour polymériser ladite résine,
- des moyens de fini de polymérisation (10', 10") générant un rayonnement ultraviolet de puissance supérieure à celle du rayonnement produit par lesdits moyens de pré-polymérisation (20), pour effectuer le fini de la polymérisation, lesdits moyens de fini de polymérisation (10', 10") étant disposés en sortie desdits moyens de pré-polymérisation (20).

4. Dispositif selon la revendication 3, caractérisé en ce que lesdits moyens de fini de polymérisation comprennent un ou plusieurs dispositifs du type à ampoule excitée par une source d'excitation pour générer un rayonnement ultraviolet, réflecteur et contre-réflecteur, ladite ampoule étant disposée le long de l'axe focal dudit réflecteur, de sorte que le rayonnement ultraviolet qu'elle génère est concentré sur l'axe de défilement dudit ruban, ledit axe de défilement étant confondu avec l'axe focal dudit contre-réflecteur.

5. Dispositif selon l'une des revendications 3 ou 4 caractérisé en ce que lesdits moyens de fini de polymérisation comprennent un ou plusieurs dispositifs du même type que lesdits moyens de pré-polymérisation, c'est-à-dire du type à ampoule de symétrie de révolution autour d'un axe.

6. Dispositif selon l'une des revendications 3 à 5 caractérisé en ce que lesdits moyens de pré-polymérisation ou de fini de polymérisation sont munis de dispositif de refroidissement.
